# EUROPÄISCHE PATENTANMELDUNG

(11) **EP 3 537 370 A1**
(43) Veröffentlichungstag der Anmeldung: **11.09.2019**
(21) Anmeldenummer: 19159007.4
(22) Anmeldetag: 25.02.2019
(51) Int. Cl.: G06Q 50/00, G06Q 50/28

(54) **VERFAHREN ZUM EINRICHTEN EINER ÜBERWACHUNGSZONE IN EINER WARENLOGISTIKEINRICHTUNG UND ORTUNGSSYSTEM FÜR EINE WARENLOGISTIKEINRICHTUNG**

(30) Priorität: 05.03.2018 DE 102018104998
(71) Anmelder: Jungheinrich Aktiengesellschaft, 22047 Hamburg (DE)
(72) Erfinder: Grabbe, Florian, 22335 Hamburg (DE); Ahrens, Stefan, 25462 Rellingen (DE); Heise, Sven-Ole, 24783 Osterrönfeld (DE); Kopelke, Jan, 22337 Hamburg (DE); Altmann, Tony, 24616 Brokstedt (DE)
(74) Vertreter: Seemann & Partner Patentanwälte mbB

(57) **Zusammenfassung**

Die Erfindung betrifft ein Verfahren zum Einrichten einer Überwachungszone (4) eines Ortungssystems zur Positionserfassung wenigstens eines beweglichen Objekts in einer Warenlogistikeinrichtung (2), ein Verfahren zum Betreiben eines solchen Ortungssystems sowie ein Ortungssystem für eine Warenlogistikeinrichtung (2). Das Verfahren zum Einrichten der Überwachungszone (4) umfasst die folgenden Verfahrensschritte: Bewegen einer Zoneneinrichtungsvorrichtung (50) in einem Erfassungsbereich auf einem geschlossenen Bewegungspfad (6) und gleichzeitiges Erfassen von wenigstens drei unterschiedlichen Pfadpositionen (7) der Zoneneinrichtungsvorrichtung (50), Ermitteln eines Verlaufs eines äußeren Rands (5) der einzurichtenden Überwachungszone (4) aus den erfassten Pfadpositionen (7) und Definieren einer von dem äußeren Rand (5) eingeschlossenen Fläche als Überwachungszone (4).

## Beschreibung

Die Erfindung betrifft ein Verfahren zum Einrichten einer Überwachungszone eines Ortungssystems zur Positionserfassung wenigstens eines beweglichen Objekts in einer Warenlogistikeinrichtung. Ferner betrifft die Erfindung ein Verfahren zum Betreiben eines Ortungssystems und Ortungssystem für eine Warenlogistikeinrichtung.

In Warenlogistikeinrichtungen, wie z. B. Lagerhallen, ist eine Positionserfassung von verschiedenen beweglichen Objekten, wie beispielsweise Personen, Flurförderzeugen oder Waren, für einen effizienten Betrieb von Vorteil. Mit Ortungssystemen, die eine derartige Positionserfassung ermöglichen, können beispielsweise die zurückgelegten Wege nachvollzogen und optimiert, Standorte überprüft und Kollisionen verhindert werden.

Ortungssysteme umfassen vielfach Ankerknoten, die an bestimmten Fixpunkten angebracht sind. Die Position eines beweglichen Objekts relativ zu diesen Ankerknoten wird beispielsweise mittels Lateration bestimmt.

Es ist vorteilhaft, wenn in einer Warenlogistikeinrichtung Überwachungszonen festgelegt werden können. Diese Überwachungszonen können beispielsweise Sperrzonen oder Schutzzonen sein oder als Zonen mit Geschwindigkeitsbegrenzungen für Flurförderzeuge eingerichtet sein.

Um derartige Überwachungszonen festzulegen, kann beispielsweise ein Sender in der Warenlogistikeinrichtung angeordnet werden. Alle Flurförderzeuge, die sich in Reichweite eines von dem Sender ausgesendeten Signals befinden, werden beispielsweise automatisch abgebremst. Nachteilhaft kann auf diese Weise aber immer nur ein kreisförmiger Bereich um den Sender als Überwachungszone definiert werden, was nicht für alle Anwendungsbereiche eine zufriedenstellende Lösung darstellt.

Alternativ kann ein Ortungssystem mit einem Koordinatensystem eingerichtet werden. In diesem Fall kann beispielsweise auf einer Anzeige des Ortungssystems eine schematische Darstellung eines Erfassungsbereichs des Ortungssystems eingeblendet werden. Auf dieser Anzeige kann die Überwachungszone durch eine Benutzereingabe markiert oder eingezeichnet werden, um den von der Überwachungszone umfassten Bereich festzulegen. Dies erfordert aber zunächst, dass eine solche schematische Darstellung eines Erfassungsbereichs erstellt wird, beispielsweise durch eine genaue Vermessung der Warenlogistikeinrichtung. Eine solche Vermessung ist aber mit einem erheblichen Aufwand verbunden, der bei jeder Änderung der räumlichen Gegebenheiten im Erfassungsbereich wiederholt werden muss.

Es ist eine Aufgabe der Erfindung, ein Verfahren zum Einrichten einer Überwachungszone eines Ortungssystems in einer Warenlogistikeinrichtung, ein Verfahren zum Betreiben eines Ortungssystems in einer Warenlogistikeinrichtung und ein Ortungssystem für eine Warenlogistikeinrichtung anzugeben, mit denen eine Überwachungszone mit geringem Aufwand eingerichtet werden kann.

Diese Aufgabe wird gelöst durch ein Verfahren zum Einrichten einer Überwachungszone eines Ortungssystems zur Positionserfassung wenigstens eines beweglichen Objekts in einer Warenlogistikeinrichtung, wobei das Verfahren durch die folgenden Verfahrensschritte fortgebildet ist:
- Bewegen einer Zoneneinrichtungsvorrichtung in einem Erfassungsbereich des Ortungssystems auf einem geschlossenen Bewegungspfad und
- gleichzeitiges Erfassen von wenigstens drei unterschiedlichen Pfadpositionen der Zoneneinrichtungsvorrichtung,
- Ermitteln eines Verlaufs eines äußeren Rands der einzurichtenden Überwachungszone aus den erfassten Pfadpositionen,
- Definieren einer von dem äußeren Rand eingeschlossenen Fläche als Überwachungszone.

Unter einem beweglichen Objekt wird im Kontext der vorliegenden Beschreibung beispielsweise ein Benutzerendgerät oder ein Flurförderzeug verstanden. Unter einer Warenlogistikeinrichtung werden beispielsweise eine Lagerhalle oder Freifläche, eine Industriehalle, eine Werkstatthalle, ein zusammenhängender Komplex solcher Hallen oder Freiflächen sowie gegebenenfalls ein umliegendes Betriebsgelände verstanden.

Die Zoneneinrichtungsvorrichtung ist vorteilhaft mit Kommunikationsmitteln ausgestattet, durch die die Position der Zoneneinrichtungsvorrichtung im Erfassungsbereich des Ortungssystems bestimmbar ist.

Vorteilhaft ist es mit dem erfindungsgemäßen Verfahren möglich, eine Überwachungszone in dem Erfassungsbereich des Ortungssystems einzurichten, ohne dass die Warenlogistikeinrichtung vorher vermessen werden muss. Außerdem ist eine solche Überwachungszone nicht auf eine kreisförmige Form festgelegt, wie sie bei Verwendung eines Senders zum Markieren der Überwachungszone vielfach der Fall ist.

Zum Einrichten der Überwachungszone wird die Zoneneinrichtungsvorrichtung lediglich auf einem Bewegungspfad bewegt, der im Wesentlichen dem äußeren Rand der einzurichtenden Zone entspricht. Währenddessen wird wenigstens drei Mal die Position der Zoneneinrichtungsvorrichtung erfasst. Diese Positionen werden als Pfadpositionen gespeichert. Anschließend wird aus diesen Pfadpositionen der äußere Rand der Überwachungszone ermittelt, wobei die von dem äußeren Rand eingeschlossene Fläche als Überwachungszone definiert wird. Die Pfadpositionen spannen somit die Überwachungszone auf. Die Überwachungszone kann frei definiert werden.

Um die Überwachungszone aufzuspannen, sind wenigstens drei Pfadpositionen notwendig. Vorteilhaft wird jedoch eine erheblich größere Anzahl an Pfadpositionen erfasst, da die Genauigkeit, mit der der äußere Rand dem Bewegungspfad der Zoneneinrichtungsvorrichtung folgt, mit zunehmender Zahl von Pfadpositionen größer wird.

Bevorzugt umfasst das Ortungssystem zumindest zwei Ankerknoten, die Referenzpunkte in einem Koordinatensystem des Ortungssystems festlegen, wobei zum Erfassen der wenigstens drei Pfadpositionen eine Abstandsmessung durch Signalübertragung zwischen der Zoneneinrichtungsvorrichtung und den mindestens zwei Ankerknoten durchgeführt wird.

Unter einem Ankerknoten wird im Kontext der vorliegenden Beschreibung eine ortsfeste Vorrichtung verstanden, die an einem festgelegten und bekannten Ort der Warenlogistikeinrichtung angeordnet ist. Mit anderen Worten sind also die Positionen der Ankerknoten in einem gemeinsamen Koordinatensystem bekannt. Die Ankerknoten verfügen über Kommunikationsmittel zur Signalübertragung zu der Zoneneinrichtungsvorrichtung und zu einer an dem beweglichen Objekt angeordneten Sende- und Empfangsvorrichtung. Durch diese Signalübertragung lässt sich beispielsweise der Abstand zwischen einem der Ankerknoten und der Zoneneinrichtungsvorrichtung und zwischen einem der Ankerknoten und dem beweglichen Objekt bestimmen. Hierzu kann beispielsweise eine Laufzeitmessung oder auch eine Messung der Signalstärke durchgeführt werden.

Ist der Abstand zu einer ausreichend großen Anzahl von Ankerknoten bekannt, kann die Position der Zoneneinrichtungsvorrichtung und/oder des beweglichen Objekts in Relation zu den Ankerknoten bestimmt werden. In der Regel sind dafür drei Ankerknoten notwendig. Die Positionsbestimmung durch Abstandsmessung wird auch als Lateration bezeichnet. In manchen Fällen kann es auch ausreichend sein, den Abstand zu lediglich zwei Ankerknoten zu bestimmen. Die zugehörigen Entfernungskreise weisen zwei Schnittpunkte auf, so dass eine solche Positionsbestimmung nicht eindeutig ist. Liegen die zugehörigen Ankerknoten jedoch beispielsweise an einer Außengrenze der Warenlogistikeinrichtung, so dass eine der beiden möglichen Positionen außerhalb der Warenlogistikeinrichtung liegt, kann diese Position zur Positionserfassung ignoriert werden und die Positionsbestimmung ist eindeutig.

Die Ankerknoten bilden Referenzpunkte in einem Koordinatensystem des Ortungssystems. Den Pfadpositionen, den Positionen der Zoneneinrichtungsvorrichtung sowie den Positionen anderer beweglicher Objekte, die mit einer Sende- und Empfangsvorrichtung ausgestattet sind, wird in dem Koordinatensystem ein eindeutiger Koordinatenpunkt zugeordnet. Ebenso wird der Überwachungszone ein Koordinatenbereich in dem Koordinatensystem zugeordnet.

Eine Signalübertragung zwischen den Ankerknoten und der Zoneneinrichtungsvorrichtung findet bevorzugt mittels Ultra-Breitband-Technologie statt. Ebenso finden bevorzugt weitere Signalübertragungen im Ortungssystem, beispielsweise zwischen den Ankerknoten und Sende- und Empfangsvorrichtungen mittels Ultra-Breitband-Technologie statt. Alternativ oder zusätzlich finden Signalübertragungen zwischen den Ankerknoten und der Zoneneinrichtungsvorrichtung und/oder weitere Signalübertragungen im Ortungssystem über ein anderes Frequenzband statt, insbesondere mittels weiterer Kommunikationstechniken, beispielsweise WLAN oder ZigBee.

In einer bevorzugten Ausführungsform wird die Zoneneinrichtungsvorrichtung während des Bewegens von einer Person mitgeführt. Dadurch wird vorteilhaft eine einfache, flexible und präzise Einrichtung der Überwachungszone erreicht.

Gemäß einer alternativen Ausführungsform ist die Zoneneinrichtungsvorrichtung in ein Flurförderzeug integriert oder wird von einem Flurförderzeug mitgeführt. Dies ist insbesondere dann vorteilhaft, wenn die einzurichtende Überwachungszone eine große Ausdehnung aufweist.

Weiterhin bevorzugt wird durch eine erste Benutzereingabe die Erfassung der Pfadpositionen gestartet und durch eine zweite Benutzereingabe die Erfassung der Pfadpositionen beendet, wobei die Benutzereingaben insbesondere an der Zoneneinrichtungsvorrichtung stattfinden. Vorteilhaft wird dadurch eine leichte Handhabung der Zoneneinrichtungsvorrichtung und ein unkompliziertes Einrichten der Überwachungszone erreicht.

Vorzugsweise wird der äußere Rand aus den Pfadpositionen ermittelt, indem jede Pfadposition mit einer zeitlich nachfolgend aufgenommenen Pfadposition verbunden wird, insbesondere durch abschnittsweise Interpolation, wobei eine zuletzt bestimmte Pfadposition mit einer zuerst bestimmten Pfadposition verbunden wird, insbesondere durch abschnittsweise Interpolation.

Die Verbindung der Pfadpositionen kann beispielsweise durch eine stückweise lineare Interpolation erfolgen. In einer Ausführung werden dann hintereinander aufgenommene Pfadpositionen jeweils durch eine Linie verbunden. Alternativ kann auch über mehr als zwei Pfadpositionen interpoliert werden. In diesem Fall verläuft der interpolierte äußere Rand der Überwachungszone nicht notwendigerweise durch jede Pfadposition.

Statt einer linearen Interpolation können alternativ Polynome höheren Grades, trigonometrische Funktionen oder ähnliche Funktionen zur Interpolation verwendet werden. Alternativ oder zusätzlich kann auch eine Spline-Interpolation erfolgen. Durch die Verbindung der zuletzt bestimmten Pfadpositionen mit der zuerst bestimmten Pfadposition wird der äußere Rand geschlossen, so dass die eingeschlossene Fläche eindeutig definiert ist. Auch für den Fall, dass der ermittelte äußere Rand nicht direkt durch die zuletzt aufgenommene Pfadposition und/oder die zuerst aufgenommene Pfadposition und/oder eine andere Pfadposition verläuft, wird stets ein geschlossener äußerer Rand ermittelt.

Die Aufgabe wird außerdem gelöst durch ein Verfahren zum Betreiben eines Ortungssystems zur Positionserfassung wenigstens eines beweglichen Objekts in einer Warenlogistikeinrichtung mit wenigstens einer Überwachungszone, die mit einem Verfahren zum Einrichten einer Überwachungszone gemäß einer der zuvor ausgeführten Ausführungsformen eingerichtet wird, wobei eine Position des beweglichen Objekts erfasst und festgestellt wird, ob sich das bewegliche Objekt innerhalb oder außerhalb der Überwachungszone befindet.

Vorteilhaft wird durch dieses Verfahren zum Betreiben eines Ortungssystems eine leicht einzurichtende Überwachungszone zur Verfügung gestellt, in der überwacht werden kann, ob sich das bewegliche Objekt innerhalb oder außerhalb dieser Überwachungszone befindet.

Bevorzugt wird eine Mitteilung generiert, wenn sich das bewegliche Objekt innerhalb der Überwachungszone befindet, wobei insbesondere diese Mitteilung einer weiteren Einheit außerhalb des Ortungssystems bereitgestellt oder an diese gesendet wird.

Im Rahmen dieses Verfahrens sind eine Reihe von möglichen Mitteilungen vorgesehen, die auf diese Weise generiert werden. Beispielsweise kann die Überwachungszone als Zone mit Geschwindigkeitsbegrenzung eingerichtet werden. Das bewegliche Objekt ist in diesem Fall beispielsweise ein Flurförderzeug. Fährt das Flurförderzeug in die Überwachungszone ein, wird vom Ortungssystem eine Mitteilung an ein Steuerungssystem des Flurförderzeugs übermittelt, die Geschwindigkeit zu begrenzen. Das Steuerungssystem des Flurförderzeugs ist dabei entweder Teil des Ortungssystems oder eine Einheit außerhalb des Ortungssystems. Alternativ kann als Mitteilung auch eine Warnung, beispielsweise auf einer Anzeige des Flurförderzeugs, ausgegeben werden, dass sich das Flurförderzeug in einer Zone mit Geschwindigkeitsbegrenzung befindet.

Weiterhin kann die Überwachungszone auch einen Gefahrenbereich anzeigen, wie beispielsweise eine unübersichtliche Kreuzung. In diesem Fall wird beispielsweise die Geschwindigkeit eines Flurförderzeugs begrenzt, wenn sich neben dem Flurförderzeug ein weiteres bewegliches Objekt, wie z. B. ein anderes Flurförderzeug oder eine Person, in der Überwachungszone aufhält. Zudem oder alternativ kann in diesem Fall eine Warnung auf einer Anzeige der Flurförderzeuge oder an eine Warnvorrichtung, die von der Person mitgeführt wird, ausgegeben werden. Eine solche Warnung kann auch akustisch und/oder haptisch ausgegeben werden. Unter einer haptischen Ausgabe wird insbesondere ein Vibrieren eines Teils des Flurförderzeuges, beispielsweise des Lenkrades, verstanden.

Die Überwachungszone kann ebenfalls ein Bereich innerhalb der Warenlogistikeinrichtung mit beschränktem Zugang sein. Bewegt sich beispielsweise ein Flurförderzeug oder eine Person in die Überwachungszone, welche nicht die Zugangsvoraussetzungen für diesen Bereich erfüllt, wird als Mitteilung eine Warnung an das Flurförderzeug, die Person und/oder an Aufsichtspersonal ausgegeben.

Es ist auch der umgekehrte Fall vorstellbar, wenn beispielsweise nur ein bestimmter Bereich innerhalb des Erfassungsbereichs des Ortungssystems für Flurförderzeuge freigegeben ist. In diesem Fall ist die Überwachungszone der für die Flurförderzeuge freigegebene Bereich. Eine Mitteilung wird in diesem Fall generiert, wenn sich das Flurförderzeug außerhalb der Überwachungszone befindet.

Als Überwachungszone kann auch der Bereich um eine Tür oder ein Tor definiert werden, wobei mittels der Mitteilung ein Öffnungsmechanismus der Tür oder des Tors angesteuert wird, wenn sich ein bewegliches Objekt innerhalb der Überwachungszone befindet.

Schließlich wird die Aufgabe gelöst durch ein Ortungssystem für eine Warenlogistikeinrichtung, welches dadurch fortgebildet ist, dass das Ortungssystem dazu eingerichtet ist, durch Bewegung einer Zoneneinrichtungsvorrichtung in einem Erfassungsbereich des Ortungssystems auf einem geschlossenen Bewegungspfad und gleichzeitige Erfassung von wenigstens drei unterschiedlichen Pfadpositionen der Zoneneinrichtungsvorrichtung den Verlauf eines äußeren Rands einer einzurichtenden Überwachungszone zu ermitteln und eine von dem äußeren Rand eingeschlossene Fläche als Überwachungszone zu definieren, wobei das Ortungssystem ferner dazu eingerichtet ist, mittels Positionserfassung festzustellen, ob sich ein mit einer Sende- und Empfangsvorrichtung ausgestattetes bewegliches Objekt innerhalb oder außerhalb der Überwachungszone befindet.

Auf das Ortungssystem treffen gleiche oder ähnliche Vorteile zu, wie sie bereits zuvor im Hinblick auf Verfahren zum Einrichten einer Überwachungszone und das Verfahren zum Betreiben eines Ortungssystems erwähnt wurden.

Bevorzugt umfasst das Ortungssystem zumindest zwei Ankerknoten, die dazu eingerichtet sind, Referenzpunkte in einem Koordinatensystem des Ortungssystems festzulegen, wobei zur Erfassung der wenigstens drei Pfadpositionen eine Abstandsmessung durch Signalübertragung zwischen der Zoneneinrichtungsvorrichtung und den mindestens zwei Ankerknoten durchgeführt wird.

Weiterhin bevorzugt ist das Ortungssystem dazu eingerichtet, Signalübertragungen zwischen Ankerknoten und der Zoneneinrichtungsvorrichtung und/oder zwischen den Ankerknoten und der Sende- und Empfangsvorrichtung mittels Ultra-Breitband-Technologie durchzuführen.

Vorzugsweise ist das Ortungssystem zudem dazu eingerichtet, durch eine erste Benutzereingabe die Erfassung der Pfadpositionen zu starten und durch eine zweite Benutzereingabe die Erfassung der Pfadpositionen zu beenden, wobei die Benutzereingaben insbesondere an der Zoneneinrichtungsvorrichtung stattfinden.

Ferner ist das Ortungssystem bevorzugt dazu eingerichtet, eine Mitteilung zu generieren, wenn sich das bewegliche Objekt innerhalb der Überwachungszone befindet, wobei insbesondere diese Mitteilung einer weiteren Einheit außerhalb des Ortungssystems bereitgestellt oder an diese gesendet wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung einer Warenlogistikeinrichtung mit einer Überwachungszone,
- Fig. 2: eine schematisch vereinfachte Darstellung einer Zoneneinrichtungsvorrichtung,
- Fig. 3 bis Fig. 5: schematisch vereinfachte Darstellungen eines Einrichtungsvorgangs einer Überwachungszone in einer Warenlogistikeinrichtung,
- Fig. 6: eine schematisch vereinfachte Darstellung einer Ermittlung einer Überwachungszone aus einem Bewegungspfad, Pfadpositionen und einem äußeren Rand.

In den Zeichnungen sind jeweils gleiche oder gleichartige Elemente und/oder Teile mit denselben Bezugsziffern versehen, so dass von einer erneuten Vorstellung jeweils abgesehen wird.

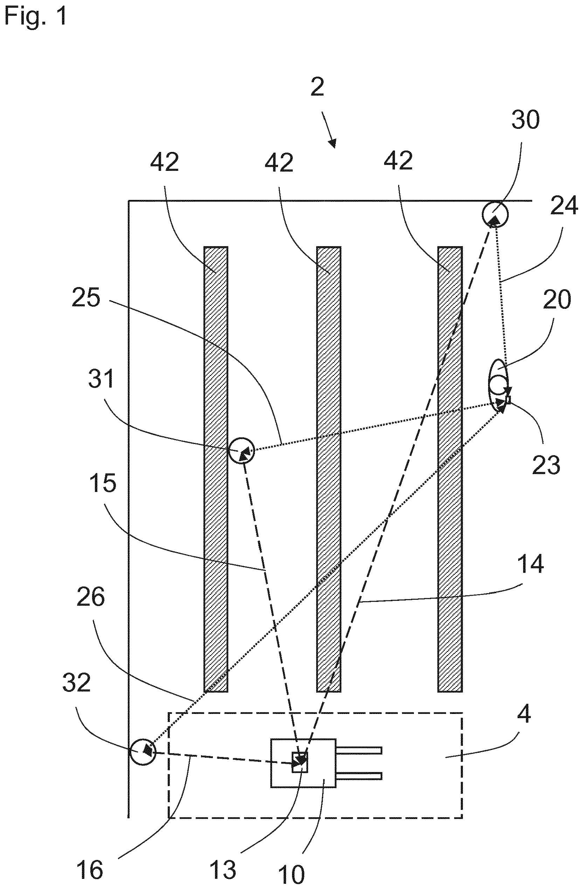

In Fig. 1 ist schematisch ein Teil einer Warenlogistikeinrichtung 2 dargestellt, beispielsweise eine Lagerhalle mit mehreren Regalen 42. Die Warenlogistikeinrichtung 2 ist mit einem Ortungssystem ausgestattet, mittels dessen die Position von beweglichen Objekten in einem Erfassungsbereich der Ortungsvorrichtung bestimmt werden kann. Dazu werden mehrere Ankerknoten 30, 31, 32 ortsfest in der Warenlogistikeinrichtung 2 angeordnet. Die Ankerknoten, 30, 31, 32 legen Referenzpunkte für ein Koordinatensystem des Ortungssystems fest. Weiterhin sind die Ankerknoten 30, 31, 32 mit Kommunikationsmitteln zur Signalübertragung ausgestattet, beispielsweise zur Signalübertragung mittels Ultra-Breitband-Technologie.

In der Warenlogistikeinrichtung 2 befindet sich ein Flurförderzeug 10, das mit einer ersten Sende- und Empfangsvorrichtung 13 ausgestattet ist, und eine Person 20, die eine zweite Sende- und Empfangsvorrichtung 23 als Benutzerendgerät mit sich führt. Mittels Abstandsmessung durch Signalübertragung, beispielsweise Laufzeitmessungen oder Messungen der Signalstärke, zwischen den Ankerknoten 30, 31, 32 und den Sende- und Empfangsvorrichtungen 13, 23 werden die Abstände 14, 15, 16 zwischen den Ankerknoten 30, 31, 32 und dem Flurförderzeug 10 sowie die Abstände 24, 25, 26 zwischen den Ankerknoten 30, 31, 32 und dem Benutzerendgerät der Person 20 bestimmt. Auf diese Weise kann die Position des Flurförderzeugs 10, der Person 20 oder eines anderen, mit einer Sende- und Empfangsvorrichtung 13, 23 ausgestatteten beweglichen Objekts im Erfassungsbereich des Ortungssystems bestimmt werden. Diesen Positionen wird dann ein Punkt im Koordinatensystem zugeordnet.

In dem Erfassungsbereich des Ortungssystems ist eine Überwachungszone 4 eingerichtet. Bei der Überwachungszone 4 handelt es sich um eine virtuelle Zone, die einen bestimmten Koordinatenbereich im Koordinatensystem des Ortungssystems umfasst. Das Ortungssystem überprüft, ob sich das Flurförderzeug 10, die Person 20 oder ein anderes bewegliches Objekt innerhalb oder außerhalb der Überwachungszone 4 befindet. Handelt es sich bei der Überwachungszone 4 beispielsweise um eine Zone mit Geschwindigkeitsbegrenzung, wird die Geschwindigkeit des Flurförderzeugs 10 begrenzt. Alternativ oder zusätzlich kann eine Warnung an den Fahrer des Flurförderzeugs 10 und/oder die Person 20 ausgegeben werden. In jedem Fall wird eine Mitteilung generiert, die an das Flurförderzeug 10, an das Benutzerendgerät der Person 20 oder an eine andere Einheit gesendet wird. Bei dieser Mitteilung handelt es sich beispielsweise um eine Aufforderung an ein Steuerungssystem des Flurförderzeugs 10, die Geschwindigkeit zu begrenzen. Das Steuerungssystem des Flurförderzeugs 10 kann auch Teil des Ortungssystems sein und direkt die Geschwindigkeit des Flurförderzeugs 10 begrenzen.

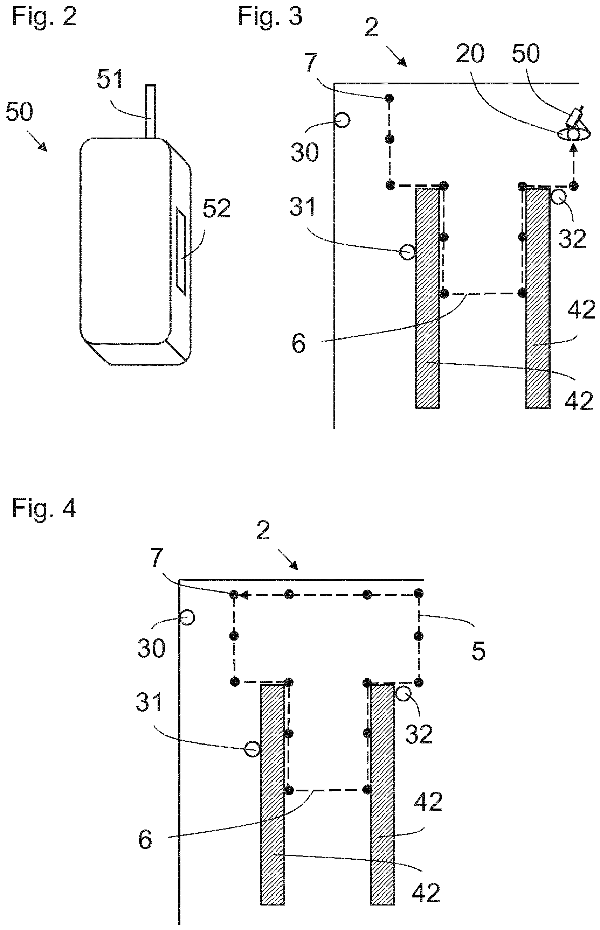

Fig. 2 zeigt in einer schematischen Darstellung eine Zoneneinrichtungsvorrichtung 50. Die Ausführungsform der Zoneneinrichtungsvorrichtung 50 gemäß Fig. 2 ist dafür eingerichtet, von einer Person mitgeführt zu werden, es handelt sich also beispielhaft um ein Benutzerendgerät. Bei der Zoneneinrichtungsvorrichtung 50 kann es sich auch um die zweite Sende- und Empfangsvorrichtung 23 handeln, oder die Zoneneinrichtungsvorrichtung 50 ist Teil der zweiten Sende- und Empfangsvorrichtung 23, oder die zweite Sende- und Empfangsvorrichtung 23 ist Teil der Zoneneinrichtungsvorrichtung 50. Die Zoneneinrichtungsvorrichtung 50 umfasst Kommunikationsmittel 51 zur Signalübertragung mit den Ankerknoten 30, 31, 32. Weiterhin weist die Zoneneinrichtungsvorrichtung 50 eine Taste 52 auf, mit der die Einrichtung der Überwachungszone 4 gestartet und beendet wird.

Fig. 3 bis Fig. 5 zeigen beispielhaft und schematisch einen Einrichtungsvorgang einer Überwachungszone 4. Eine Person 20 befindet sich im Erfassungsbereich des Ortungssystems einer Warenlogistikeinrichtung 2 und führt eine Zoneneinrichtungsvorrichtung 50 mit sich. Zum Einrichten der Überwachungszone 4 positioniert sich die Person 20 auf einem Rand der einzurichtenden Überwachungszone 4 und betätigt dann ein erstes Mal die Taste 52 der Zoneneinrichtungsvorrichtung 50. Das Ortungssystem beginnt mit einer wiederholten Erfassung der Positionen der Zoneneinrichtungsvorrichtung 50 und speichert diese als Pfadpositionen 7 ab. Beispielsweise wird die Position der Zoneneinrichtungsvorrichtung 50 im zeitlichen Abstand weniger Sekunden erfasst. Aus Gründen der Übersichtlichkeit sind in Fig. 3 und 4 jeweils nur einige Pfadpositionen 7 als schwarze, ausgefüllte Kreise dargestellt. Gleichzeitig mit der Erfassung der Pfadpositionen 7 beginnt die Person 20 sich auf einem Bewegungspfad 6 zu bewegen, wie in Fig. 3 dargestellt.

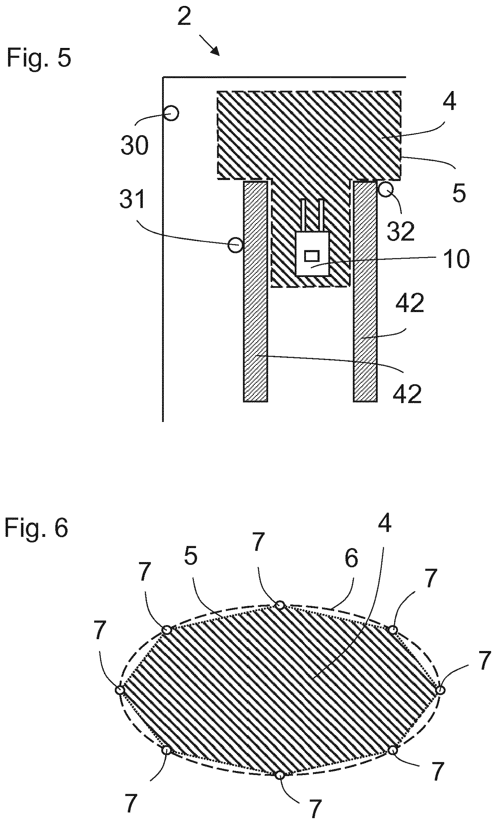

Nachdem die Person 20 wieder an der Startposition angekommen ist, also einen geschlossenen Bewegungspfad 6 abgeschritten hat, betätigt sie die Taste 52 ein weiteres Mal, um die Erfassung von Pfadpositionen 7 zu beenden. Wie in Fig. 4 gezeigt, ermittelt das Ortungssystem anschließend aus den erfassten Pfadpositionen 7 einen äußeren Rand 5 der Überwachungszone 4. Die von dem äußeren Rand 5 eingeschlossene Fläche wird als Überwachungszone 4 definiert, wie in Fig. 5 gezeigt. Der Überwachungszone 4 kann beispielsweise eine Geschwindigkeitsbegrenzung für Flurförderzeuge 10 zugewiesen werden, so dass ein in die Überwachungszone 4 einfahrendes Flurförderzeug 10 in seiner Geschwindigkeit begrenzt wird. Auf diese Weise kann die Kollisionsgefahr in einer unübersichtlichen Kreuzung, wie bei der Ausfahrt zwischen zwei Regalen 42, reduziert werden.

In Fig. 6 ist schematisch gezeigt, wie aus den Pfadpositionen 7 der äußere Rand 5 der Überwachungszone 4 ermittelt wird. Die Zoneneinrichtungsvorrichtung 50 wird dazu auf dem Bewegungspfad 6 bewegt, der der tatsächlichen Bewegung der Zoneneinrichtungsvorrichtung 50 entspricht. In regelmäßigen Abständen wird die Position der Zoneneinrichtungsvorrichtung 50 bestimmt und als Pfadposition 7 abgespeichert. Diese Pfadpositionen 7 liegen folglich auf dem Bewegungspfad 6.

Anschließend wird aus den Pfadpositionen 7 der äußere Rand 5 ermittelt und die von dem äußeren Rand 5 eingeschlossene Fläche als Überwachungszone 4 definiert. Zur Ermittlung des äußeren Rands 5 aus den Pfadpositionen 7 können die Pfadpositionen 7 beispielsweise mit einer stückweise linearen Interpolation verbunden werden, wie in Fig. 6 gezeigt. Wie aus Fig. 6 hervorgeht, folgt in diesem Fall der äußere Rand 5 nicht notwendigerweise dem beschrittenen Bewegungspfad 6. Um diese Abweichung zu minimieren, kann die Zahl der Pfadpositionen 7 erhöht werden und/oder können andere Verfahren zur Ermittlung des äußeren Rands 5 verwendet werden, wie beispielsweise kubische Interpolation oder die Verwendung von Spline-Interpolation. In der Regel wird die Zahl der Pfadpositionen 7 deutlich höher sein als in den Fig. 3 bis 6, so dass der äußere Rand 5 dem Bewegungspfad 6 im Wesentlichen folgt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuqszeichenliste

- 2: Warenlogistikeinrichtung
- 4: Überwachungszone
- 5: Rand
- 6: Bewegungspfad
- 7: Pfadposition
- 10: Flurförderzeug
- 13: erste Sende- und Empfangsvorrichtung
- 14, 15, 16: Abstand
- 20: Person
- 23: zweite Sende- und Empfangsvorrichtung
- 24, 25, 26: Abstand
- 30, 31, 32: Ankerknoten
- 42: Regal
- 50: Zoneneinrichtungsvorrichtung
- 51: Kommunikationsmittel
- 52: Taste

## Patentansprüche

1. Verfahren zum Einrichten einer Überwachungszone (4) eines Ortungssystems zur Positionserfassung wenigstens eines beweglichen Objekts in einer Warenlogistikeinrichtung (2), **gekennzeichnet durch** die folgenden Verfahrensschritte:
- Bewegen einer Zoneneinrichtungsvorrichtung (50) in einem Erfassungsbereich des Ortungssystems auf einem geschlossenen Bewegungspfad (6) und
- gleichzeitiges Erfassen von wenigstens drei unterschiedlichen Pfadpositionen (7) der Zoneneinrichtungsvorrichtung (50),
- Ermitteln eines Verlaufs eines äußeren Rands (5) der einzurichtenden Überwachungszone (4) aus den erfassten Pfadpositionen (7),
- Definieren einer von dem äußeren Rand (5) eingeschlossenen Fläche als Überwachungszone (4).

2. Verfahren nach Anspruch 1, **dadurch gekennzeichnet, dass** das Ortungssystem zumindest zwei Ankerknoten (30, 31, 32) umfasst, die Referenzpunkte in einem Koordinatensystem des Ortungssystems festlegen, wobei zum Erfassen der wenigstens drei Pfadpositionen (7) eine Abstandsmessung durch Signalübertragung zwischen der Zoneneinrichtungsvorrichtung (50) und den mindestens zwei Ankerknoten (30, 31, 32) durchgeführt wird.

3. Verfahren nach Anspruch 2, **dadurch gekennzeichnet, dass** Signalübertragungen zwischen den Ankerknoten (30, 31, 32) und der Zoneneinrichtungsvorrichtung (50) mittels Ultra-Breitband-Technologie stattfindet.

4. Verfahren nach einem der Ansprüche 1 bis 3, **dadurch gekennzeichnet, dass** durch eine erste Benutzereingabe die Erfassung der Pfadpositionen (7) gestartet und durch eine zweite Benutzereingabe die Erfassung der Pfadpositionen (7) beendet wird, wobei die Benutzereingaben insbesondere an der Zoneneinrichtungsvorrichtung (50) stattfinden.

5. Verfahren nach einem der Ansprüche 1 bis 4, **dadurch gekennzeichnet, dass** der äußere Rand (5) aus den Pfadpositionen (7) ermittelt wird, indem jede Pfadposition (7) mit einer zeitlich nachfolgend aufgenommenen Pfadposition (7) verbunden wird, insbesondere durch abschnittsweise Interpolation, wobei eine zuletzt bestimmte Pfadposition (7) mit einer zuerst bestimmten Pfadposition (7) verbunden wird, insbesondere durch abschnittsweise Interpolation.

6. Verfahren zum Betreiben eines Ortungssystems zur Positionserfassung wenigstens eines beweglichen Objekts in einer Warenlogistikeinrichtung (2) mit wenigstens einer Überwachungszone (4), die mit einem Verfahren nach einem der Ansprüche 1 bis 5 eingerichtet wird, wobei eine Position des beweglichen Objekts erfasst und festgestellt wird, ob sich das bewegliche Objekt innerhalb oder außerhalb der Überwachungszone (4) befindet.

7. Verfahren nach Anspruch 6, **dadurch gekennzeichnet, dass** eine Mitteilung generiert wird, wenn sich das bewegliche Objekt innerhalb der Überwachungszone (4) befindet, wobei insbesondere diese Mitteilung einer weiteren Einheit außerhalb des Ortungssystems bereitgestellt oder an diese gesendet wird.

8. Ortungssystem für eine Warenlogistikeinrichtung (2), **dadurch gekennzeichnet, dass** das Ortungssystem dazu eingerichtet ist, durch Bewegung einer Zoneneinrichtungsvorrichtung (50) in einem Erfassungsbereich des Ortungssystems auf einem geschlossenen Bewegungspfad (6) und gleichzeitige Erfassung von wenigstens drei unterschiedlichen Pfadpositionen (7) der Zoneneinrichtungsvorrichtung (50) den Verlauf eines äußeren Rands (5) der einzurichtenden Überwachungszone (4) zu ermitteln und eine von dem äußeren Rand (5) eingeschlossene Fläche als Überwachungszone (4) zu definieren, wobei das Ortungssystem ferner dazu eingerichtet ist, mittels Positionserfassung festzustellen, ob sich ein mit einer Sende- und Empfangsvorrichtung (13, 23) ausgestattetes bewegliches Objekt innerhalb oder außerhalb der Überwachungszone (4) befindet.

9. Ortungssystem nach Anspruch 8, **dadurch gekennzeichnet, dass** das Ortungssystem zumindest zwei Ankerknoten (30, 31, 32) umfasst, die dazu eingerichtet sind, Referenzpunkte in einem Koordinatensystem des Ortungssystems festzulegen, wobei zur Erfassung der wenigstens drei Pfadpositionen (7) eine Abstandsmessung durch Signalübertragung zwischen der Zoneneinrichtungsvorrichtung (50) und den mindestens zwei Ankerknoten (30, 31, 32) durchgeführt wird.

10. Ortungssystem nach Anspruch 9, **dadurch gekennzeichnet, dass** das Ortungssystem dazu eingerichtet ist, Signalübertragungen zwischen Ankerknoten (30, 31, 32) und der Zoneneinrichtungsvorrichtung (50) und/oder zwischen den Ankerknoten (30, 31, 32) und der Sende- und Empfangsvorrichtung (13, 23) mittels Ultra-Breitband-Technologie durchzuführen.

11. Ortungssystem nach einem der Ansprüche 8 bis 10, **dadurch gekennzeichnet, dass** das Ortungssystem dazu eingerichtet ist, durch eine erste Benutzereingabe die Erfassung der Pfadpositionen (7) zu starten und durch eine zweite Benutzereingabe die Erfassung der Pfadpositionen (7) zu beenden, wobei die Benutzereingaben insbesondere an der Zoneneinrichtungsvorrichtung (50) stattfinden.

12. Ortungssystem nach einem der Ansprüche 8 bis 11, **dadurch gekennzeichnet, dass** das Ortungssystem dazu eingerichtet ist, eine Mitteilung zu generieren, wenn sich das bewegliche Objekt innerhalb der Überwachungszone (4) befindet, wobei insbesondere diese Mitteilung einer weiteren Einheit außerhalb des Ortungssystems bereitgestellt oder an diese gesendet wird.
